# EUROPÄISCHE PATENTSCHRIFT

(11) **EP 1 407 664 B1**
(45) Veröffentlichungstag und Bekanntmachung des Hinweises auf die Patenterteilung: **24.01.2007**
(21) Anmeldenummer: 03020913.4
(22) Anmeldetag: 16.09.2003
(51) Int. Cl.: A01M 7/00

(54) **Anbauvorrichtung für das Spritzgestänge einer Feldspritze**
Mounting device for the boom of an agricultural sprayer
Dispositif de montage pour le barre d'un appareil de pulvérisation

(30) Priorität: 28.09.2002 DE 10245375
(43) Veröffentlichungstag der Anmeldung: 14.04.2004
(73) Patentinhaber: Amazonen-Werke H. Dreyer GmbH & Co. KG, 49205 Hasbergen (DE)
(72) Erfinder: Oberheide, Friedrich, 49143 Bissendorf (DE)

(56) Entgegenhaltungen:
- EP-A- 0 223 170
- DE-A- 2 934 020
- DE-C- 3 419 356
- FR-A- 2 671 262
- FR-A- 2 816 805

## Beschreibung

Die Erfindung betrifft eine Anbauvorrichtung für das Spritzgestänge einer Feldspritze gemäß des Oberbegriffes des Patentanspruches 1.

Eine derartige Anbauvorrichtung ist beispielsweise in der deutschen Patentschrift 34 19 356 beschrieben. Das Spritzgestänge ist bei dieser Feldspritze mit Art eines Kreuzgelenkes am Grundrahmen aufgehängt, so dass es um eine in Fahrtrichtung verlaufende und liegend angeordnete Achse, sowie um eine aufrecht stehende Achse Schwenkbewegungen ausführen kann. Nachteilig ist bei dieser bekannten Anbauvorrichtung, dass von Nickbewegungen und Geschwindigkeitsschwankungen herrührende Schwingungen und Kräfte auf das Spritzgestänge übertragen werden, so dass das Spritzgestänge in und entgegen der Fahrtrichtung zum Schwingen angeregt wird. Diese Geschwindigkeitsänderungen treten insbesondere auf welligen und unebenen Bodenoberflächen auf, wenn das Zugfahrzeug bzw. das Fahrwerk einer Feldspritze in Art einer "Berg- und Talfahrt" über diese Unebenheiten und Bodenwelle fährt bzw. gezogen wird, so dass aufgrund des Spiels in dem Antrieb des Zugfahrzeuges bzw. in dem Zugverband bei dem Übergang von "Bergfahrt" auf "Talfahrt" eine Umlenkung von Zug- auf Schubbetrieb in den Zugverband bzw. in dem Antriebstange erfolgt. Hierdurch kommt es zu Geschwindigkeitsänderungen und Beschleunigungen bzw. Verzögerungen in dem das Spritzgestänge tragenden Grundrahmen.

Der Erfindung liegt die Aufgabe zugrunde, eine Anbauvorrichtung für ein Spritzgestänge zu schaffen, welches zumindest teilweise verhindert, dass Nickbewegungen und/oder Geschwindigkeitsschwankungen der Feldspritze auf das Spritzgestänge übertragen werden.

Diese Aufgabe wird erfindungsgemäß dadurch gelöst, dass das Spritzgestänge mittels zumindest eines weiteren Gelenkes derart aufgehängt ist, dass der Grundrahmen sich gegenüber dem Spritzgestänge in und entgegen der Fahrtrichtung in Art einer Schubbewegung bewegen kann. Hierdurch wird das Ziel der Erfindung erreicht, eine gleichförmige Vorwärtsbewegung des Spritzgestänges bzw. eine gleichförmigere Vorwärtsbewegung des Spritzgestänges erreichen. Hierbei wird die Ungleichförmigkeit des Grundrahmens in seiner Vorwärtsbewegung insbesondere auf unebenen und welligen Bodenoberflächen von dem Spritzgestänge zumindest teilweise fern gehalten. Es werden zumindest durch die erfindungsgemäßen Aufhängungen zumindest die Beschleunigungsspitzen, Stoß- und Ungleichförmigkeitsspitzen von dem Spritzgestänge fern gehalten.

In einer Ausführungsform ist vorgesehen, dass das Spritzgestänge mittels zumindest eines beispielsweise als Pendelstange ausgebildeten Pendelelementes über Gelenke am Grundrahmen angeordnet ist, deren Gelenkachsen liegend und quer zur Fahrtrichtung verlaufen. Mittels dieser Pendelstange ergibt sich eine einfache und robuste Aufhängung des Spritzgestänges.

Um in einfacher Weise zu gewährleisten, dass das Spritzgestänge um eine aufrechte Achse pendeln kann, ist vorgesehen, dass das obere Gelenk des Pendelelementes als Kugelkopflager ausgebildet ist.

Es ist auch möglich, um die Pendelung um eine aufrechte Achse zu gewährleisten, dass das obere Gelenk des Pendelelementes als Kreuzgelenk ausgebildet ist.

Eine einfache Ausbildung des oberen Gelenkes, um eine Pendelung des Spritzgestänges um eine aufrechte Achse sowie um eine quer zur Fahrtrichtung liegende Achse zu ermöglichen, ist vorgesehen, dass das obere Gelenk zwei sich kreuzende Gelenkachsen aufweist, wovon die eine in Fahrtrichtung und die andere quer zur Fahrtrichtung verläuft und jeweils in zumindest annähernd horizontaler Ebene verlaufen.

Ein besonders gutes Verhalten des Spritzgestänges wird dadurch erreicht, dass die Pendelstange mit Abstand oberhalb des Schwerpunktes des Spritzgestänges angeordnet ist.

Eine besonders einfache Ausgestaltung des Gelenkgliedes lässt sich dadurch erreichen, dass das Gelenkglied als Federelement ausgebildet und an seiner Ober- und Unterseite eingespannt ist. Durch diese Ausgestaltungen sind keine separaten Lager für Gelenke erforderlich. Die Bewegung des Spritzgestänges zu dem Rahmen wird durch das als Federelement ausgebildete Gelenkglied in einfacher Weise ermöglicht. Eine vorteilhafte Ausgestaltung des Federelementes ergibt sich dadurch, dass das Federelement als plattenförmiges Element ausgebildet ist. Hierbei ist in vorteilhafter Weise das Federelement derart angeordnet, dass die Ebene des Federelementes sich in aufrechter Ebene und quer zur Fahrtrichtung erstreckt.

Weitere Einzelheiten der Erfindung sind der Beispielsbeschreibung und den Zeichnungen zu entnehmen. Hierbei zeigen
- Fig. 1: die Anbauvorrichtung in perspektivischer Darstellung,
- Fig. 2: die Anbauvorrichtung des Spritzgestänges in der Ansicht von hinten,
- Fig. 3: die Anbauvorrichtung in Seitenansicht,
- Fig. 4: die Anbauvorrichtung in der Draufsicht,
- Fig. 5: eine weitere Anbauvorrichtung in perspektivischer Darstellung,
- Fig. 6: die Anbauvorrichtung nach Fig. 5 des Spritzgestänges in der Ansicht von hinten und
- Fig. 7: die Anbauvorrichtung in Seitenansicht.

Die Anbauvorrichtung 1 für das Spitzgestänge 2 einer Feldspritze weist den mit der Feldspritze verbundenen Grundrahmen 3 auf. An dem Grundrahmen 3 ist über verschiedene Gelenkglieder das Spritzgestänge 2 aufgehängt. Das Spritzgestänge 2 weist das Mittelteil 4 auf, an welchem über nicht dargestellte Gelenke sich anschließende zueinander einklappbare und ausklappbare Sektionen des Spritzgestänge in bekannter und daher nicht näher dargestellter Weise anschließen. Das Mittelteil 4 des Spritzgestänges 2 ist mittels zweier als Pendelstangen 5 und 6 ausgebildeter Pendelelemente an dem Grundrahmen 3 befestigt. Jede Pendelstange 5,6 weist ein unteres Gelenk 7, dessen Gelenkachse 8 quer zur Fahrtrichtung 9 und horizontal verläuft auf, mit denen die Pendelstangen 5 gelenkig an dem Mittelteil 4 des Gestänges 2 angeordnet sind. Jede Pendelstange 5,6 ist jeweils mittels dieser Gelenke 7 an dem oberen Teil des Mittelteiles 4 des Spritzgestänges 2 gelenkig angeordnet. Jede Pendelstange 5,6 ist mittels eines weiteren Gelenkes 10, welches als Kugelkopflager ausgebildet ist, über einen Gelenkbolzen 11 bzw. 12 mit dem Grundrahmen 3 verbunden. Die Gelenkachse dieser Gelenkbolzen 11 und 12 verläuft horizontal und in Fahrtrichtung 9. Aufgrund der Kugelkopfausbildung können die Pendelstangen 5 und 6 um die quer zur Fahrtrichtung 9 und horizontal liegenden Pendelachse 14 schwenken. Somit kann das Spritzgestänge 2 aufgrund der gelenkigen Aufhängung der Pendelstangen 5,6 durch die unteren Gelenke 7 und durch die Bewegungsmöglichkeit, die der Kugelkopf gibt sich in und entgegen der Fahrtrichtung 9 bewegen, so dass das Spritzgestänge 2 bzw. der Grundrahmen 3 sich gegenüber dem Spritzgestänge 2 in und entgegen der Fahrtrichtung 9 in einer Art Schubbewegung bewegen kann. Des weiteren kann das gesamte Spritzgestänge 2 um die in Fahrtrichtung 9 verlaufende Schwenkachse 13 pendeln. Außerdem ist die vordere obere Aufhängung des Gelenkbolzen 10 so angeordnet, dass der Gelenkbolzen sich quer zur Fahrtrichtung 9, wie durch der Doppelpfeil 15 angedeutet bewegen kann. Durch die Aufhängung der hinteren Pendelstange 5 mittels des Kugelkopfes 10 kann das gesamte Spritzgestänge um die aufrechte und durch den Kugelkopf verlaufende Schwenkachse 16 pendeln.

Wie bereits vor erwähnt, kann das Spritzgestänge 2 mittels der Aufhängung in den Pendelgliedern 5,6 sich gegenüber dem Grundrahmen 3 bewegen. Die Aufhängung des Spritzgestänges 2 ist derart, dass der Grundrahmen 2 sich gegenüber dem Spritzgestänge 2 in und entgegen der Fahrtrichtung 9 in eine Art Schubbewegung bewegen kann.

Das Spritzgestänge 2 ist mittels der beiden als Pendelstangen 5,6 ausgebildeten Pendelelemente über Gelenke 7, am Grundrahmen 10,11 angeordnet, deren Gelenkachsen 14 liegend und quer zur Fahrtrichtung 9 verlaufen.

Die Pendelstangen 5, 6 sind ist mit Abstand oberhalb des Schwerpunktes des Spritzgestänges 2 angeordnet.

Aufgrund der Aufhängung des Spritzgestänges 2 mittels der vorbeschriebenen Pendelstangen 5,6 am Grundrahmen 3 wirken sich sowohl Nickbewegungen die ungleichförmige Vorwärtsbewegungen sowie Stöße nur in geringem Maße auf das Spritzgestänge 2 aus. Diese ungleichförmigen Vorwärtsbewegungskomponenten werden gedämpft oder ganz vom Spritzgestänge 2 ferngehalten.

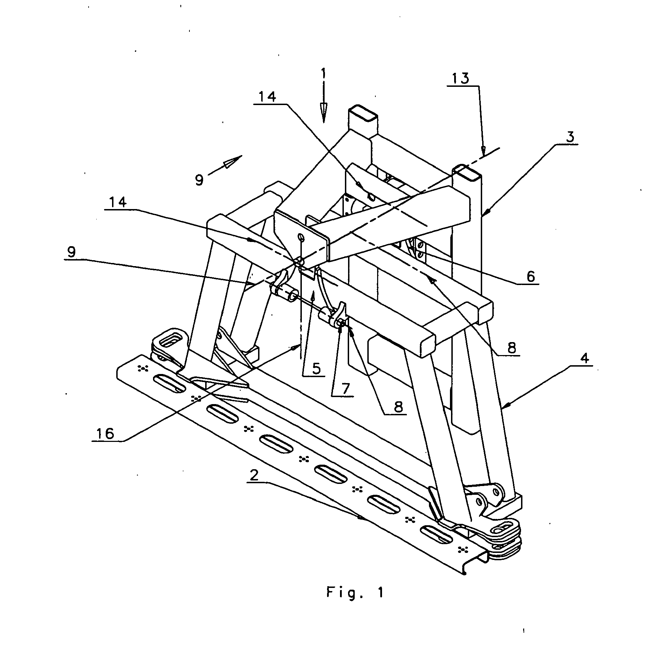

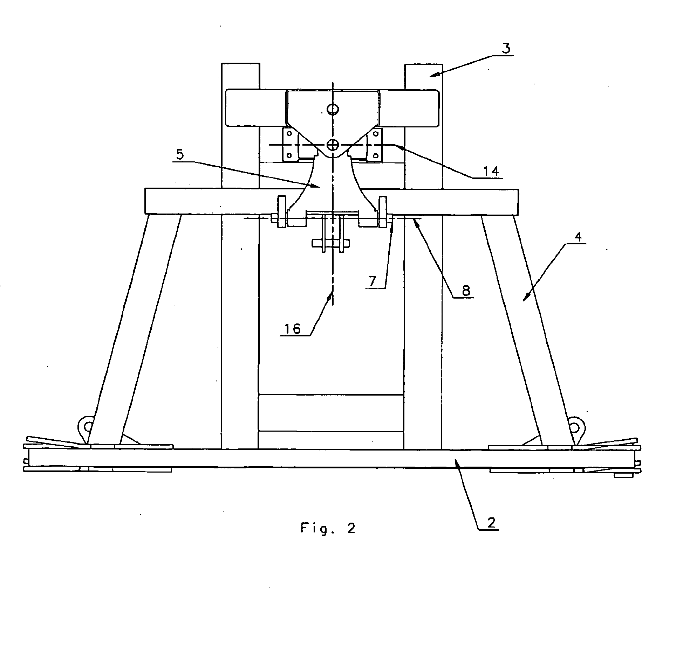

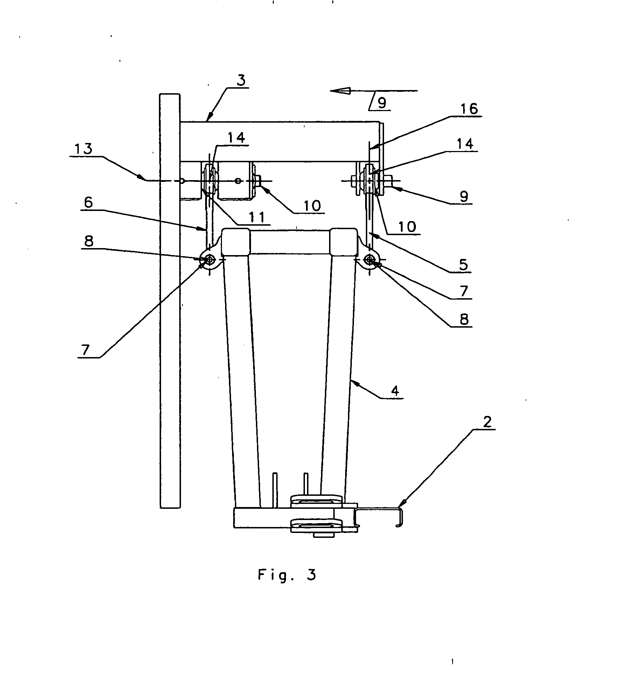

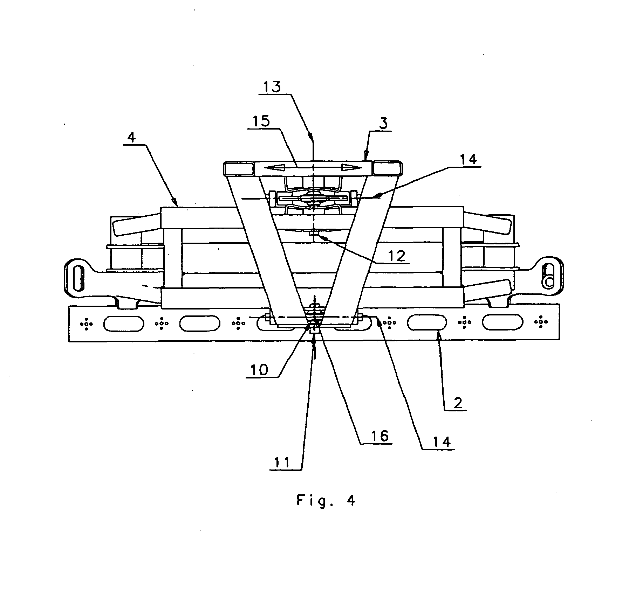

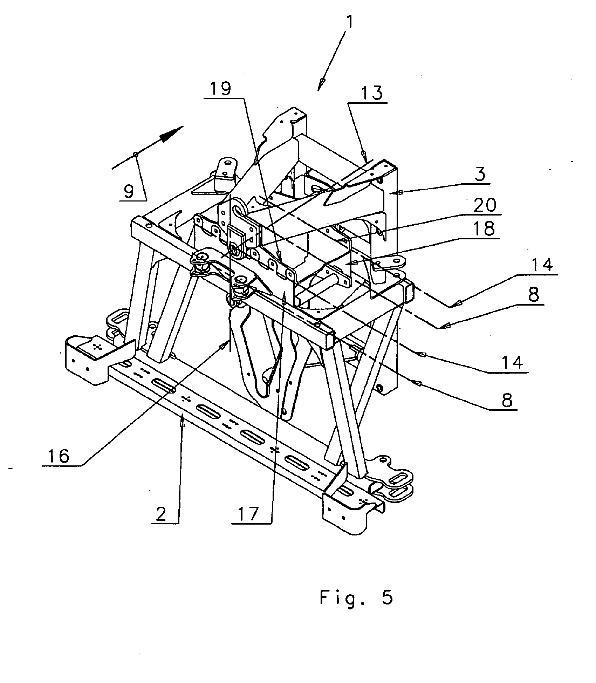

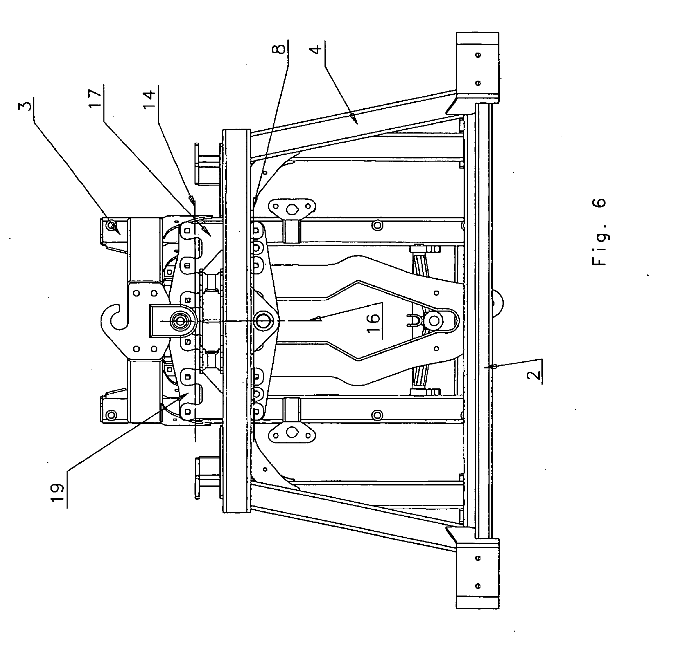

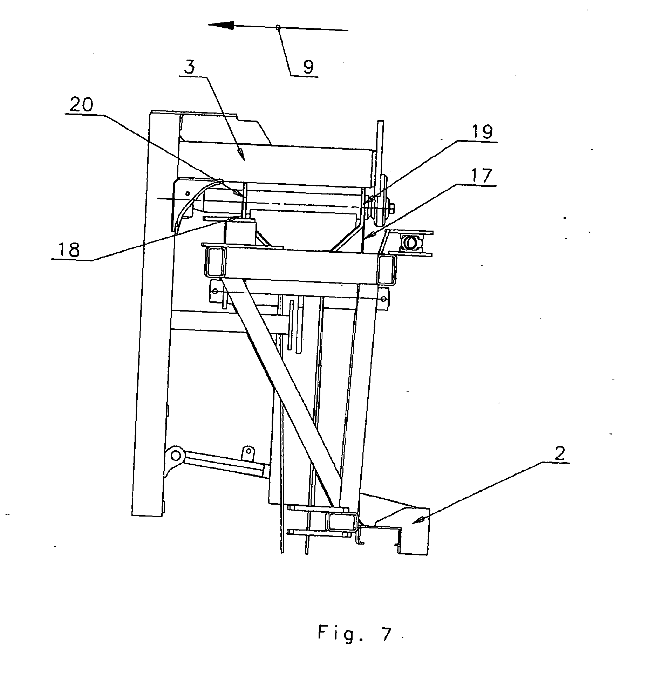

Die Anbauvorrichtung gemäß den Fig. 5 bis 7 unterscheidet sich von der Ausgestaltung gemäß den Fig. 1 bis 4 dadurch, dass die Pendelstangen 5 und 6 der Gelenkglieder 17 und 18 nicht mittels Gelenke angeordnet ist, sondern als Federelement ausgebildet und an seiner Ober- und Unterseite eingespannt ist. Die Gelenkglieder 17 und 18 sind über die Einspannelemente 19 mit dem Grundrahmen 3 und über die Einspannelemente 20 mit dem Mittelteil 4 des Spritzgestänges 2 verbunden. Die Federelemente 17 sind als plattenförmige Elemente ausgebildet. Die Ebene der Federelemente 17 erstrecken sich in aufrechter Ebene und quer zur Fahrtrichtung 9. Die Wirkungsweise der als Federelement ausgebildeten Gelenkglieder 17 und 18 entspricht der Wirkungsweise gemäß der Gelenkgliedes 5 und 6 nach den Fig. 1 bis 4. Durch die plattenförmige Elemente 17 und 18 wird erreicht, dass das Spritzgestänge 2 sich gegenüber dem Grundrahmen bewegen kann. Die Aufhängung des Spritzgestänges 2 ist derart, dass der Grundrahmen 3 gegenüber dem Spritzgestänge 2 in und entgegen der Fahrtrichtung 9 in einer Art Schubbewegung bewegen kann. Aufgrund der Aufhängung des Spritzgestänges 2 mittels der plattenförmigen Federelemente 17, 18 am Grundrahmen 3 wirken sich sowohl Nickbewegungen bei ungleichförmiger Vorwärtsbewegung sowie Stößen in geringem Maße auf das Spritzgestänge 2 aus. Die ungleichförmigen Vorwärtsbewegungskomponenten werden gedämpft oder ganz vom Spritzgestänge 2 ferngehalten.

## Patentansprüche

1. Anbauvorrichtung für das Spritzgestänge (2) einer Feldspritze, welche einen mit der Feldspritze verbundenen Grundrahmen (3) aufweist, an dem das Spritzgestänge (3) über Gelenkglieder (10,11) derart aufgehängt ist, dass es sowohl um eine in Fahrtrichtung (9) verlaufende und liegend angeordnete Achse (13) als auch um eine aufrechtstehende Achse (16) Schwenkbewegung ausführen kann, **dadurch, gekennzeichnet, dass** das Spritzgestänge (2) mittels zumindest eines weiteren Gelenkgliedes (5,6,17,18) derart aufgehängt ist, dass der Grundrahmen (3) sich gegenüber dem Spritzgestänge (2) in und entgegen der Fahrtrichtung (9) in Art einer Schubbewegung bewegen kann.

2. Anbauvorrichtung nach Anspruch 1, **dadurch gekennzeichnet, dass** das Spritzgestänge (2) mittels zumindest eines beispielsweise als Pendelstange (5,6) ausgebildeten Pendelelementes über Gelenke (7,10,11) am Grundrahmen (3) angeordnet ist, deren Gelenkachsen (8) liegend und quer zur Fahrtrichtung (9) verlaufen.

3. Anbauvorrichtung nach Anspruch 2, **dadurch gekennzeichnet, dass** das obere Gelenk (10, 11) des Pendelelementes (5,6) als Kugelkopflager ausgebildet ist.

4. Anbauvorrichtung nach Anspruch 2, **dadurch gekennzeichnet, dass** das obere Gelenk des Pendelelementes als Kreuzgelenk ausgebildet ist.

5. Anbauvorrichtung nach einem oder mehreren der vorstehenden Ansprüche, **dadurch gekennzeichnet, dass** das obere Gelenk des Gelenkgliedes (10,11) zwei sich kreuzende Gelenkachsen (14,16) aufweist, wovon die eine in Fahrtrichtung und die andere quer zur Fahrtrichtung (9) verläuft und jeweils in zumindest annähernd horizontaler Ebene verlaufen.

6. Anbauvorrichtung nach Anspruch 2, **dadurch gekennzeichnet, dass** die Pendelstange (5,6) mit Abstand oberhalb des Schwerpunktes des Spritzgestänges (2) angeordnet ist.

7. Anbauvorrichtung nach einem oder mehreren der vorstehenden Ansprüche, **dadurch gekennzeichnet, dass** das Gelenkglied (17,18) als Federelement ausgebildet und an seiner Ober- und Unterseite eingespannt ist.

8. Anbauvorrichtung nach Anspruch 7, **dadurch gekennzeichnet, dass** das Federelement (17) als plattenförmiges Element ausgebildet ist.

9. Anbauvorrichtung nach Anspruch 7 und/oder 8, **dadurch gekennzeichnet, dass** das die Ebene des Federelementes 17) sich in aufrechter Ebene und quer zur Fahrtrichtung (9) erstreckt.

## Claims

1. Attachment device for the spray boom (2) of an agricultural spraying machine, which includes a base frame (3), which is connected to the agricultural spraying machine and on which base frame the spray boom (3) is suspended by means of pivot joint members (10, 11) in such a manner that the said spray boom can carry out pivotal movement both about an axis (13) that extends in the direction of travel and is disposed in a horizontal position and also about a vertical axis (16), **characterised in that** the spray boom (2) is suspended through the intermediary of at least one additional pivot joint member (5, 6, 17, 18) in such a manner that the base frame (3) is able to move relative to the spray boom (2) in the direction of travel (9) and in opposition to the direction of travel (9) in a kind of thrust motion.

2. Attachment device according to claim 1, **characterised in that** the spray boom (2) is disposed on the base frame (3) through the intermediary of at least one oscillating member, which is in the form, for example, of a pendulum rod (5, 6), by means of pivot joints (7, 10, 11), the pivot joint axes of which (8) extend in a horizontal position and transversely relative to the direction of travel (9).

3. Attachment device according to claim 2, **characterised in that** the upper pivot joint (10, 11) of the oscillating member (5, 6) is in the form of a ball bearing.

4. Attachment device according to claim 2, **characterised in that** the upper pivot joint of the oscillating member is in the form of a universal joint.

5. Attachment device according to one or more of the preceding claims, **characterised in that** the upper pivot joint of the pivot joint member (10, 11) includes two intersecting pivot joint axes (14, 16), one of which extends in the direction of travel (9) and the other of which extends transversely relative to the direction of travel (9) and in each case they extend in at least an approximately horizontal plane.

6. Attachment device according to claim 2, **characterised in that** the pendulum rod (5, 6) is disposed at a spacing above the centre of gravity of the spray boom (2).

7. Attachment device according to one or more of the preceding claims, **characterised in that** pivot joint member (17, 18) is in the form of a resilient member and is secured at its upper and lower end.

8. Attachment device according to claim 7, **characterised in that** the resilient member (17) is in the form of a plate-shaped member.

9. Attachment device according to claim 7 and/or 8, **characterised in that** the plane of the resilient member (17) extends in a vertical plane and transversely relative to the direction of travel (9).

## Revendications

1. Dispositif d'attelage d'une flèche de pulvérisation (2) d'un pulvérisateur agricole comportant un cadre de base (3) relié au pulvérisateur agricole et auquel est suspendue la flèche de pulvérisation (2) par l'intermédiaire d'éléments d'articulation (10, 11) de manière à pouvoir exécuter un mouvement de pivotement à la fois autour d'un axe couché (13) dirigé dans la direction de déplacement (9) et aussi autour d'un axe montant (16),
**caractérisé en ce que**
la flèche de pulvérisation (2) est suspendue à l'aide d'au moins un autre élément d'articulation (5, 6, 17, 18) de façon que le cadre de base (3) puisse se déplacer par rapport à la flèche de pulvérisation (2) dans la direction de déplacement (9) et dans la direction opposée à la manière d'un mouvement de poussée.

2. Dispositif d'attelage selon la revendication 1,
**caractérisé en ce que**
la flèche de pulvérisation (2) est installée sur le cadre de base (3) par l'intermédiaire d'au moins un élément pendulaire réalisé par exemple sous la forme de barres pendulaires (5, 6) par l'intermédiaire d'articulations (7, 10, 11) et dont les axes d'articulation (8) sont couchés et sont dirigés transversalement par rapport à la direction de déplacement (9).

3. Dispositif d'attelage selon la revendication 2,
**caractérisé en ce que**
l'articulation supérieure (10, 11) de l'élément pendulaire (5, 6) est en forme de palier à rotule.

4. Dispositif d'attelage selon la revendication 2,
**caractérisé en ce que**
l'articulation supérieure de l'élément pendulaire est en forme d'articulation à la Cardan.

5. Dispositif d'attelage selon l'une ou plusieurs des revendications précédentes,
**caractérisé en ce que**
l'articulation supérieure de l'élément d'articulation (10, 11) comporte deux axes d'articulation (14, 16), croisés, l'un de ces axes étant dirigé dans la direction de déplacement et l'autre dirigé transversalement à la direction de déplacement (9) et ces axes sont chaque fois au moins sensiblement dans un plan horizontal.

6. Dispositif d'attelage selon la revendication 2,
**caractérisé en ce que**
la barre pendulaire (5, 6) est installée à distance au-dessus du centre de gravité de la flèche de pulvérisation (2).

7. Dispositif d'attelage selon l'une ou plusieurs des revendications précédentes,
**caractérisé en ce que**
l'élément d'articulation (17, 18) est un élément à ressort et est encastré par ses côtés supérieur et inférieur.

8. Dispositif d'attelage selon la revendication 7,
**caractérisé en ce que**
l'élément à ressort (17) est un élément en forme de plaques.

9. Dispositif d'attelage selon la revendication 7 et/ou la revendication 8,
**caractérisé en ce que**
le plan de l'élément à ressort (17) se situe dans un plan montant transversal à la direction de déplacement (9).
